# EUROPEAN PATENT APPLICATION

(11) **EP 4 628 607 A1**
(43) Date of publication of application: **08.10.2025**
(21) Application number: 24894730.1
(22) Date of filing: 22.05.2024
(51) Int. Cl.: C22B 3/08, C22B 3/22, C22B 15/00

(54) **METHOD FOR RECOVERING CU FROM ZINC SULFATE SOLUTION**

(30) Priority: 21.11.2023 KR 20230162437
(71) Applicant: Korea Zinc Co., Ltd., Seoul 03159 (KR)
(72) Inventor: KIM, Jung Woo, Seoul 07001 (KR)
(74) Representative: Angerhausen, Christoph
(86) International application number: PCT/KR2024/095831
(87) International publication number: WO 2025/110840

(57) **Abstract**

A method for recovering copper from a zinc sulfate solution according to one embodiment of the present invention comprises: a neutral leaching process for dissolving zinc ore; a weak acid leaching process for dissolving the post-neutral leaching solution with sulfuric acid to produce a zinc sulfate solution; a de-coppering process for removing copper dissolved in the zinc sulfate solution as copper cement; a conditioning process for reducing the post-de-coppering solution; a repulping process for repulping conditioning cake discharged from the conditioning process with a zinc solution; and a purification leaching process for dissolving copper contained in the post-repulping solution with sulfuric acid, wherein zinc calcine is added to the post-purification leaching solution, and then the solution is reintroduced into the weak acid leaching process.

## Description

### TECHNICAL FIELD

The present disclosure relates to a method for recovering copper contained in zinc sulfate solutions.

### BACKGROUND ART

As a rule, zinc refining process includes a roasting process of oxidizing an zinc ore concentrate in the sphalerite form (ZnS), a leaching process of dissolving the calcine (ZnO) generated in the roasting process in sulfuric acid, a multi-stage purification process of removing impurities, and a process of subjecting the pure zinc sulfate solution thus obtained to electrolysis and producing zinc as a precipitate at the cathode. During the leaching process, various metal components contained in the zinc concentrate, such as iron (Fe), copper (Cu), nickel (Ni), cobalt (Co), and cadmium (Cd), are also leached. Among these leached metal components, copper is particularly discharged in the form of copper cement through a de-coppering process, and the discharged copper cement can be recovered in the form of pure copper through a copper refining process.

Conventionally, copper was recovered through pyrometallurgy of the by-products generated during the purification process in the zinc refining process. However, the pyrometallurgical process has a limited copper recovery rate of about 50% to 70%, and the copper grade in the slag produced by pyrometallurgical methods is between 0.3% to 0.5%, resulting in a low recovery rate of the valuable metal.

Furthermore, conventional pyrometallurgical methods require a significant amount of energy, necessitating the use of large quantities of fossil fuels.

### DISCLOSURE

### TECHNICAL PROBLEM

Provided is a method for recovering copper contained in zinc sulfate solutions, wherein a by-product generated during a purification process is linked to a de-coppering process in the existing hydrometallurgical process of zinc, whereby more than 90% of the dissolved copper in the raw materials can be recovered in a hydrometallurgical process of zinc.

Provided also is a method for recovering copper contained in zinc sulfate solutions, wherein copper recovery is carried out in liaison with a de-coppering process in the existing hydrometallurgical process of zinc without a separate refining process, thereby minimizing refining costs.

Furthermore provided is a method for recovering copper contained in zinc sulfate solutions, wherein a by-product generated in a purification process is linked to a conventional hydrometallurgical process of zinc to additionally recover zinc contained in the by-product, thereby increasing the zinc recovery rate in the wet zinc refining process.

### TECHNICAL SOLUTION

According to the one embodiment of the present invention, a method for recovering copper from a zinc sulfate solution produced from a leaching process in which zinc ore is dissolved in sulfuric acid, the method comprising: a neutral leaching process for dissolving the zinc ore; a weak acid leaching process for dissolving a post-neutral leaching process solution in which the zinc ore is dissolved with sulfuric acid to produce a zinc sulfate solution; a de-coppering process for removing the copper dissolved in the zinc sulfate solution in the form of copper cement; a conditioning process for reducing a post-de-coppering process solution discharged from the de-coppering process; a repulping process for repulping conditioning cake, which is a solid discharged from the conditioning process, with a zinc solution; and a purification leaching process for dissolving copper contained in a post-repulping process solution discharged from the repulping process by dissolving with sulfuric acid, wherein a post-purification leaching process solution discharged from the purification leaching process is neutralized by adding zinc calcine and then reintroduced into the weak acid leaching process.

The zinc sulfate solution reintroduced into the weak acid leaching process is further directed into the de-coppering process.

The conditioning process comprises: reducing the post-de-coppering process solution to generate a post-conditioning process solution; and processing the post-conditioning process solution in a thickener and a filter to discharge a solution as an iron precipitation process input solution and a solid as the conditioning cake.

The iron precipitation process input solution is introduced into an iron precipitation process for recovering iron oxide through a pressurized oxidation process.

The iron precipitation process comprises: generating a post-iron precipitation process solution through the pressurized oxidation process; and processing the post-iron precipitation process solution in a thickener and a filter to discharge a solution to be transferred to the neutral leaching process, and a solid as iron oxide.

The repulping process is carried out at a process temperature of 60°C to 80°C and a pH of 2.5 to 3.0.

The zinc solution in the repulping process contains the conditioning cake at a concentration of 100g/L to 200g/L.

The post-purification leaching process solution contains sulfuric acid at a concentration of 25g/L to 50g/L.

The copper contained in the conditioning cake is dissolved by more than 85% through the purification leaching process.

The iron and zinc contained in the conditioning cake are dissolved by more than 92% and more than 98%, respectively, through the purification leaching process.

The purification leaching process is carried out for 2 to 3 hours at a dissolution temperature of 60°C to 80°C under a process pressure of 1 to 2 atm.

The weak acid leaching process is carried out at a pH of 2.5 to 3.0.

The weak acid leaching process is carried out for 3 to 4 hours.

### ADVANTAGEOUS EFFECTS

According to the present disclosure, a by-product generated during a purification process is repetitively introduced multiple times into an existing hydrometallurgical process of zinc to recover copper dissolved in a raw hydrometallurgical material at maximal yield.

Furthermore, the costs required for copper refining process can be minimized by conducting copper recovery in liaison with an existing zinc refining process without a separate refining process.

Additionally, the recovery rate of zinc can be increased by re-introducing the zinc contained in the by-products generated during the purification process back into the hydrometallurgical process of zinc.

### DESCRIPTION OF DRAWINGS

FIG. 1 is a process flow diagram for recovering copper according to an embodiment of the present disclosure.
FIG. 2 is a process flow diagram specifically illustrating a repulping process, a purification leaching process, and a neutralization process in the method of recovering copper from a zinc sulfate solution according to an embodiment of the present disclosure.

### MODE FOR INVENTION

In a typical zinc refining process, zinc materials are leached in sulfuric acid with the concomitant leaching of iron (Fe), copper (Cu), and other elements in the sulfuric acid. The copper contained in the leachate is then separated in a solid-liquid separation process, and a strong reductant such as zinc powder is added to reduce the copper (Cu) dissolved in the form of copper sulfate (CuSO₄) to copper cement (Cu Cement) as a precipitate for removal. Additionally, a significant amount of iron is dissolved in the zinc sulfate solution, and iron is removed in an iron precipitation process (Fe precipitation).

Designed to maximize the recovery rate of copper dissolved in materials targeted by a zinc refining process, the present disclosure allows for recovering more than 90% of the copper ions contained in the leachate generated during the zinc refining process.

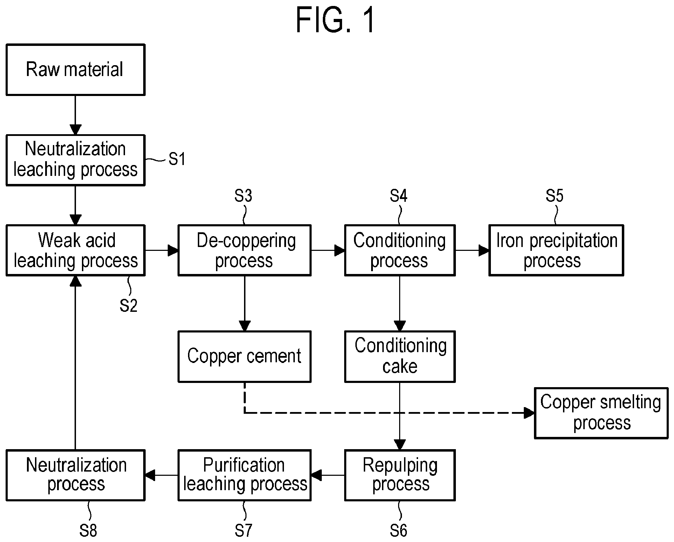

FIG. 1 is a process flow diagram for recovering copper according to an embodiment of the present disclosure.

Referring to FIG. 1, the zinc refining process includes leaching zinc-containing raw materials such as zinc concentrate, calcine obtained by roasting same, or zinc ferrite, in sulfuric acid at the atmospheric pressure to produce a zinc sulfate solution and neutralizing the sulfuric acid remaining in the leaching process with the calcine to primarily remove impurities (neutral leaching process (S1)). Copper components leached together in the leaching process of the raw materials do not precipitate in the neutralization process and thus remain in the process solution after neutralization.

The solution obtained after the dissolution of the zinc-containing raw materials and the neutralization process, which is the post-neutral leaching process solution, is again dissolved in sulfuric acid to create a zinc sulfate solution (weak acid leaching process (S2)). The pH used in the weak acid leaching process (S2) may range from about 2.5 to 3.0, and this process can be carried out in a thickener. The residence time of the zinc sulfate solution in the weak acid leaching process (S2) is about 3 to 4 hours, and the process temperature can be about 65°C.

The zinc sulfate solution discharged from the weak acid leaching process (S2) has a significant amount of copper dissolved therein. By adding a strong reductant such as zinc (Zn) powder to the zinc sulfate solution, the dissolved copper (Cu) in the form of copper sulfate (CuSO₄) can be reduced and precipitated as copper cement, which is metallic copper powder, for removal (de-coppering process (S3)). The copper cement can be recovered in the form of pure copper through a copper refining process.

The post-de-coppering process solution, discharged from the de-coppering process (S3), is introduced into the conditioning process (S4). In the conditioning process (S4), the post-de-coppering process solution is fed into a conditioning tank and let to pass through a thickener and a filter to obtain a post-conditioning process solution while discharging the solid residue as conditioning cake. The post-conditioning process solution as an iron precipitation process input solution is then introduced to an iron precipitation process (S5) where iron oxide is recovered through a pressurized oxidation process. In the iron precipitation process (S5), the iron precipitation process input solution is introduced into an iron precipitation tank and let to pass through a thickener and filter to obtain a post-iron precipitation process solution while discharging the solid residue in the form of iron oxide. The post-iron precipitation process solution is transferred back to the neutral leaching process (S1). The post-iron precipitation process solution is considered a pure zinc sulfate solution with a high content of zinc because the copper and iron are discharged in the form of copper cement and iron oxide, respectively, during the de-coppering process (S3) and the iron precipitation process (S5). This zinc sulfate solution is then transferred to a process where zinc is precipitated at the cathode through electrolytic collection.

The conditioning cake discharged from the conditioning process (S4) still contains valuable metals such as copper, iron, and zinc. To recover these metals contained in the conditioning cake, it is necessary to dissolve copper, iron, zinc, etc., contained in the conditioning cake and transfer them back to the de-coppering process, iron precipitation process, electrolysis process, etc.

To this end, the conditioning cake discharged from the conditioning process (S4) is repulped in a zinc solution at a temperature of about 60°C to 80°C for approximately 1.5 hours (repulping process (S6)). The repulping process (S6) can be performed within a pH range of about 2.5 to 3.0, and during the repulping process (S6), the concentration of the conditioning cake in the zinc solution may be about 100g/L to 200g/L.

The post-repulping process solution discharged from the repulping process (S6), is dissolved in sulfuric acid, so that most of the copper contained in the post-repulping process solution is dissolved (purification leaching process (S7)). The concentration of sulfuric acid used here may be about 25g/L to 50g/L. The purification leaching process (S7) is carried out for about 2 to 3 hours at a dissolution temperature of about 60°C to 80°C under a process pressure of about 1 to 2 atm. Through the purification leaching process (S7), the copper contained in the conditioning cake can be dissolved by more than 85%. Additionally, in the purification leaching process (S7), not only copper but also iron, zinc, and other metals contained in the conditioning cake are leached. Specifically, iron contained in the conditioning cake is dissolved by more than 92%, and zinc by more than 98% during the purification leaching process (S7).

The post-purification leaching process solution discharged from the purification leaching process (S7), goes through a process (neutralization process (S8)) where zinc calcine is introduced to neutralize the post-purification leaching process solution before being reintroduced into the weak acid leaching process (S2). The post-purification leaching process solution introduced into the weak acid leaching process (S2) is dissolved, along with the post-neutral leaching process solution discharged from the neutral leaching process (S1), in sulfuric acid to form a zinc sulfate solution which is then introduced into the de-coppering process (S3).

In the purification leaching process (S7), a significant amount of copper, iron, zinc, and other metals contained in the conditioning cake, which is the by-product from the conditioning process (S4), is dissolved, and the solution is then reintroduced into the weak acid leaching process (S2) in the zinc refining process, thereby enabling the recovery of valuable metals, especially copper, that would otherwise be discarded with the conditioning cake. Therefore, the recovery rate of dissolved copper in the raw materials for hydrometallurgy of zinc refining can be maximized. By reintroducing the zinc contained in the by-product back into the zinc refining process, the recovery rate of zinc can also be increased. Additionally, copper recovery can be achieved in liaison with a preexisting zinc refining process, without a separate copper refining process, thereby minimizing the cost required for copper refining.

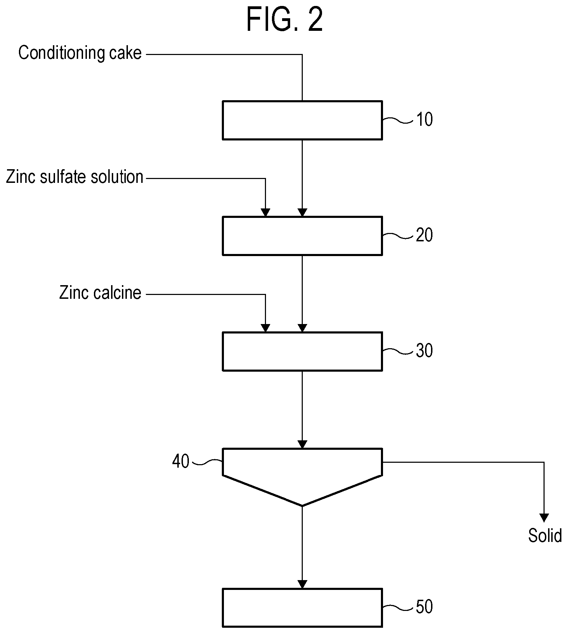

FIG. 2 is a process flow diagram specifically illustrating the repulping process (S6), purification leaching process (S7), and neutralization process (S8) in the method for recovering copper from zinc sulfate solution according to an embodiment of the present disclosure.

Referring to FIG. 2, the conditioning cake discharged from the conditioning process (S4) was introduced into a repulping tank (10) along with zinc solution. The amount of conditioning cake introduced into the repulping tank (10) is 120T/D (tons per day), and the metal composition contained in the conditioning cake was measured.

**TABLE 1**

| Proportion of Copper (Cu), Iron (Fe), Zinc (Zn), Arsenic (As), and Lead (Pb) in Conditioning Cake | | |
|---|---|---|
| | Composition (%) | T/D |
| Cu | 4.00 | 4.80 |
| Fe | 5.10 | 6.12 |
| Zn | 26.6 | 31.9 |
| As | 1.21 | 1.46 |
| Pb | 0.88 | 1.05 |

The repulping process carried out in the repulping tank (10) was performed at 60°C for 1.5 hours, and the concentration of the conditioning cake in the solution introduced into the repulping process was measured to be 143g/L. Next, the post-repulping process solution discharged from the repulping process was introduced into a purification leaching process reactor (20), and the concentration of the repulping slurry contained in the post-repulping process solution was measured.

**TABLE 2**

| Concentration of Copper (Cu), Iron (Fe), Zinc (Zn), Arsenic (As), and Lead (Pb) in Post-Repulping Process Solution | | |
|---|---|---|
| | Concentration (g/L) | T/D |
| Cu | 8.21 | 7.76 |
| Fe | 8.95 | 8.45 |
| Zn | 147 | 138.8 |
| As | 2.86 | 2.71 |
| Pb | 0.94 | 0.89 |

The post-repulping process solution was introduced, along with the zinc sulfate solution, into the purification leaching process reactor (20) and the concentration of sulfuric acid in the zinc sulfate solution was measured to be 85g/L. The concentrations of copper, iron, zinc, and arsenic in the zinc sulfate solution introduced into the purification leaching process reactor (20) were measured.

**TABLE 3**

| Concentration of Copper (Cu), Iron (Fe), Zinc (Zn), Arsenic (As) in Zinc Sulfate Solution Introduced into Purification Leaching Process | | |
|---|---|---|
| | Concentration (g/L) | T/D |
| Cu | 3.10 | 5.04 |
| Fe | 2.20 | 3.58 |
| Zn | 78.4 | 127.5 |
| As | 1.80 | 2.93 |

The post-repulping process solution and the zinc sulfate solution, both introduced into the purification leaching process reactor (20), were reacted at 65°C for 2 hours, during which most of the copper was dissolved. The concentrations and dissolution rates of copper (Cu), iron (Fe), zinc (Zn), arsenic (As), and lead (Pb) in the post-purification leaching process solution discharged from the purification leaching process were measured. At this time, the final acidity of sulfuric acid (H₂SO₄) in the post-purification leaching process solution was measured to be 35g/L.

**TABLE 4**

| Concentration of Copper (Cu), Iron (Fe), Zinc (Zn), Arsenic (As), and Lead (Pb) in Post-Purification Leaching Process Solution | | | |
|---|---|---|---|
| | Concentration (g/L) | T/D | Dissolution Rate (%) |
| Cu | 4.98 | 12.8 | 75.9 |
| Fe | 4.68 | 12.0 | 87.8 |
| Zn | 104 | 266.3 | 97.2 |
| As | 2.19 | 5.63 | 64.7 |
| Pb | 0.35 | 0.89 | 0.0 |

Referring to Table 4, the post-purification leaching process solution, which is discharged from the purification leaching process, was observed to contain copper at a dissolution rate of more than 75%, iron at a dissolution rate of more than 87%, and zinc at a dissolution rate of more than 97%. That is, most of the valuable metals (copper, zinc, iron) contained in the conditioning cake are dissolved and exist as ions in the zinc sulfate solution while undergoing the repulping and purification leaching processes. The post-purification leaching process solution is then introduced into the Fumer NT (30) after zinc calcine is added thereto. The post-purification leaching process solution is neutralized by adding zinc calcine in the Fumer NT (30). The composition of the zinc calcine introduced into the post-purification leaching process solution is shown in Table 5, below.

**TABLE 5**

| Composition of Zinc Calcine Introduced into Post- Purification Leaching Process Solution | | |
|---|---|---|
| | Concentration (g/L) | T/D |
| Cu | 7.52 | 6.72 |
| Fe | 6.00 | 5.36 |
| Zn | 24.1 | 21.5 |
| As | 1.57 | 1.40 |
| Pb | 1.10 | 0.98 |

In the Fumer NT (30), the post- purification leaching process solution was reacted by adding zinc calcine at 65°C for 1 hour, and had a final acidity of pH 2.5. The post-neutralization process solution discharged from the neutralization process in the Fumer NT (30) goes through a thickener (40) where solids are transferred out and the liquid form of the post-neutralization process solution is transferred to the settling tank (50) of the weak acid leaching process for re-introduction into the weak acid leaching process. The metals copper (Cu), iron (Fe), and zinc (Zn) contained in the reintroduced solution can be recovered through the de-coppering process, iron precipitation process, and electrolysis process and in liaison with the de-coppering process, conditioning process, iron precipitation process, electrolysis process, etc. Moreover, the post-purification leaching process solution reintroduced into the weak acid leaching process can go through the conditioning process, repulping process, and purification leaching process again, along with the newly introduced zinc sulfate solution, allowing for the recovery of copper (Cu), iron (Fe), zinc (Zn) that were not recovered in the initial cycle. Thus, the by-products discharged in the form of conditioning cake can undergo these processes multiple times, and as these processes are repeatedly carried out, the recovery rates of copper (Cu), iron (Fe), zinc (Zn) are expected to continuously increase.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

## Claims

1. A method for recovering copper from a zinc sulfate solution produced from a leaching process in which zinc ore is dissolved in sulfuric acid, the method comprising:
a neutral leaching process for dissolving the zinc ore;
a weak acid leaching process for dissolving a post-neutral leaching process solution in which the zinc ore is dissolved with sulfuric acid to produce a zinc sulfate solution;
a de-coppering process for removing the copper dissolved in the zinc sulfate solution in the form of copper cement;
a conditioning process for reducing a post-de-coppering process solution discharged from the de-coppering process;
a repulping process for repulping conditioning cake, which is a solid discharged from the conditioning process, with a zinc solution; and
a purification leaching process for dissolving copper contained in a post-repulping process solution discharged from the repulping process by dissolving with sulfuric acid,
wherein the post-purification leaching process solution discharged from the purification leaching process is neutralized by adding zinc calcine and then reintroduced into the weak acid leaching process.

2. The method of claim 1, wherein the zinc sulfate solution reintroduced into the weak acid leaching process is further directed into the de-coppering process.

3. The method of claim 1, wherein the conditioning process comprises:
reducing the post-de-coppering process solution to generate a post-conditioning process solution; and
processing the post-conditioning process solution in a thickener and a filter to discharge a solution as an iron precipitation process input solution and a solid as the conditioning cake.

4. The method of claim 3, wherein the iron precipitation process input solution is introduced into an iron precipitation process for recovering iron oxide through a pressurized oxidation process.

5. The method of claim 4, wherein the iron precipitation process comprises:
generating a post-iron precipitation process solution through the pressurized oxidation process; and
processing the post-iron precipitation process solution in a thickener and a filter to discharge a solution to be transferred to the neutral leaching process, and a solid as iron oxide.

6. The method of claim 1, wherein the repulping process is carried out at a process temperature of 60°C to 80°C and a pH of 2.5 to 3.0.

7. The method of claim 6, wherein the zinc solution in the repulping process contains the conditioning cake at a concentration of 100g/L to 200g/L.

8. The method of claim 1, wherein the post-purification leaching process solution contains sulfuric acid at a concentration of 25g/L to 50g/L.

9. The method of claim 8, wherein the copper contained in the conditioning cake is dissolved by more than 85% through the purification leaching process.

10. The method of claim 9, wherein the iron and zinc contained in the conditioning cake are dissolved by more than 92% and more than 98%, respectively, through the purification leaching process.

11. The method of claim 8, wherein the purification leaching process is carried out for 2 to 3 hours at a dissolution temperature of 60°C to 80°C under a process pressure of 1 to 2 atm.

12. The method of claim 1, wherein the weak acid leaching process is carried out at a pH of 2.5 to 3.0.

13. The method of claim 12, wherein the weak acid leaching process is carried out for 3 to 4 hours.
